# EUROPEAN PATENT APPLICATION

(11) **EP 4 810 249 A1**
(43) Date of publication of application: **23.09.2026**
(21) Application number: 24891634.8
(22) Date of filing: 23.09.2024
(51) Int. Cl.: B32B 17/10, B32B 38/00, B60J 1/00

(54) **VEHICLE GLASS AND MANUFACTURING METHOD THEREFOR**

(30) Priority: 13.11.2023 KR 20230156499
(71) Applicant: KCC GLASS Corporation, Seoul 06526 (KR)
(72) Inventor: PARK, Sang-Jin, Yongin-si, Gyeonggi-do 16851 (KR); CHO, Seong-Dae, Seongnam-si, Gyeonggi-do 13481 (KR); PARK, Ji-Su, Seongnam-si, Gyeonggi-do 13634 (KR); KIM, Kyungmin, Yongin-si, Gyeonggi-do 16909 (KR); BOK, Jin-Bi, Seoul 06095 (KR)
(74) Representative: Pfenning, Meinig & Partner mbB
(86) International application number: PCT/KR2024/014317
(87) International publication number: WO 2025/105687

(57) **Abstract**

A vehicle glass according to an embodiment of the present disclosure may include a first glass plate, a second glass plate disposed to face the first glass plate, and a metal layer provided on one surface of the first glass plate that faces the second glass plate and having a pattern transmission portion formed in a partial region to allow a radio wave that enters through the one surface to be transmitted and refracted through the first glass plate.

## Description

### [Technical Field]

The present disclosure claims priority to and the benefit of Korean Patent Application No. 10-2023-0156499, filed on November 13, 2023, the disclosure of which is incorporated herein by reference in its entirety.

The present disclosure relates to a vehicle glass and a manufacturing method thereof.

### [Background Art]

With commercialization of wireless communication services inside and outside vehicles, glass for supporting such services inside and outside vehicles has been developed. For example, there has been an increase in demand for ease of radio wave communication of terminal devices provided in vehicles, such as radio wave communication of an electronic toll collecting system (ETCS) which is a toll paying system of vehicles, Emergency Call (E-Call) which is an emergency accident notification device, a global navigation satellite system (GNSS) which is a global positioning system, and portable electronic devices of users.

To this end, vehicle glass may require a radio wave transmission window for radio wave communication of terminal devices or the like provided in vehicles. Meanwhile, the vehicle glass may be equipped with a metal coating layer for insulating the inside of vehicles, and because a predetermined region of the metal coating layer should be removed when the radio wave transmission window for radio wave communication of terminal devices or the like is provided, a predetermined region of the vehicle glass may be an uninsulated region.

Accordingly, there has been an increase in demand for a structure of vehicle glass in which insulation is improved while radio wave transmission for radio wave communication of terminal devices or the like is possible.

### [Disclosure]

### [Technical Problem]

The present disclosure is for addressing the above-described problems and is directed to providing a vehicle glass and a manufacturing method thereof capable of improving insulation while improving radio wave communication of terminal devices or the like.

### [Technical Solution]

A vehicle glass according to an embodiment of the present disclosure includes a first glass plate, a second glass plate disposed to face the first glass plate, and a metal layer provided on one surface of the first glass plate that faces the second glass plate and having a pattern transmission portion formed in a partial region to allow a radio wave that enters through the one surface to be transmitted and refracted through the first glass plate.

A manufacturing method of a vehicle glass according to an embodiment of the present disclosure includes cutting a coating glass on which a metal layer is provided, forming a pattern transmission portion by radiating a laser toward the metal layer of the cut coating glass, stacking a laminating film on the metal layer, and stacking a glass plate on the laminating film.

### [Advantageous Effects]

According to an embodiment of the present disclosure, sensitivity of radio wave communication of terminal devices or the like provided in vehicles can be improved.

According to an embodiment of the present disclosure, because insulation performance of a vehicle glass can be improved, heat shielding performance of the vehicle glass can be improved.

According to an embodiment of the present disclosure, heating performance of a vehicle glass can be improved by increasing a heating area of the vehicle glass.

### [Description of Drawings]

FIG. 1 is a schematic view of a vehicle and a vehicle glass according to one embodiment of the present disclosure.
FIG. 2 is a schematic view of a state in which radio wave communication occurs through the vehicle glass according to one embodiment of the present disclosure.
FIG. 3 is a schematic view of the vehicle glass according to one embodiment of the present disclosure.
FIG. 4 is an exploded view of the vehicle glass according to one embodiment of the present disclosure.
FIG. 5 is an exploded view of a vehicle glass according to another embodiment of the present disclosure.
FIG. 6 is a schematic view of a pattern transmission portion according to one embodiment of the present disclosure.
FIG. 7 is a schematic view of a pattern transmission portion according to another embodiment of the present disclosure.
FIGS. 8 and 9 are schematic views illustrating a manufacturing method of a vehicle glass according to one embodiment of the present disclosure.
FIGS. 10 and 11 are schematic views illustrating another manufacturing method of a vehicle glass according to one embodiment of the present disclosure.
FIGS. 12 and 13 are views showing experimental examples for radio wave reception according to the vehicle glass according to one embodiment of the present disclosure, a low emissivity (low-E) glass, and a low-E glass with a radio wave transmission window and results thereof.

### [Modes of the Invention]

Hereinafter, some embodiments of the present invention will be described in detail with reference to the exemplary drawings. It should be noted that, in assigning reference numerals to components of each drawing, like components are denoted by like reference numerals wherever possible even when the components are shown in different drawings. In addition, in describing embodiments of the present invention, when detailed description of a related known configuration or function is determined as hindering understanding of the embodiments of the present invention, the detailed description thereof will be omitted.

In this specification, front-rear, left-right, and up-down directions are designated for convenience of description and may be directions orthogonal to one another. In this specification, horizontal and vertical directions are designated for convenience of description and may be directions orthogonal to each other. However, such directions are determined relative to a direction in which a vehicle glass is arranged, and the up-down direction may not necessarily be a vertical direction. In this specification, leftward may be the -X direction indicated in the drawings, and rightward may be the X direction indicated in the drawings.

In addition, terms including ordinals such as "first" and "second" used herein may be used to describe various components, but the components are not limited by the terms, and the terms are only used for the purpose of distinguishing one component from another component. For example, a first component may be termed a second component, and likewise, a second component may be termed a first component without departing from the scope of rights of the present invention. The term "and/or" includes a combination of a plurality of related listed items or any of a plurality of related listed items.

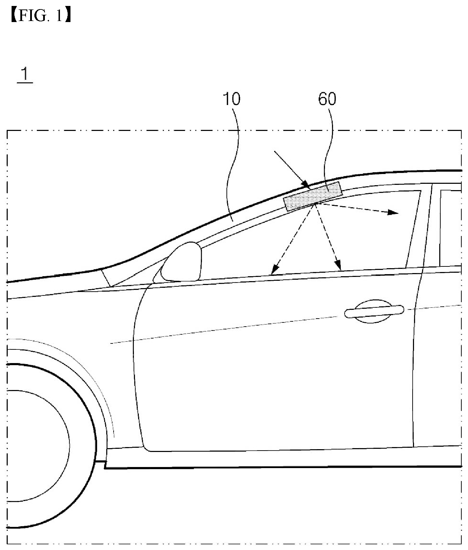

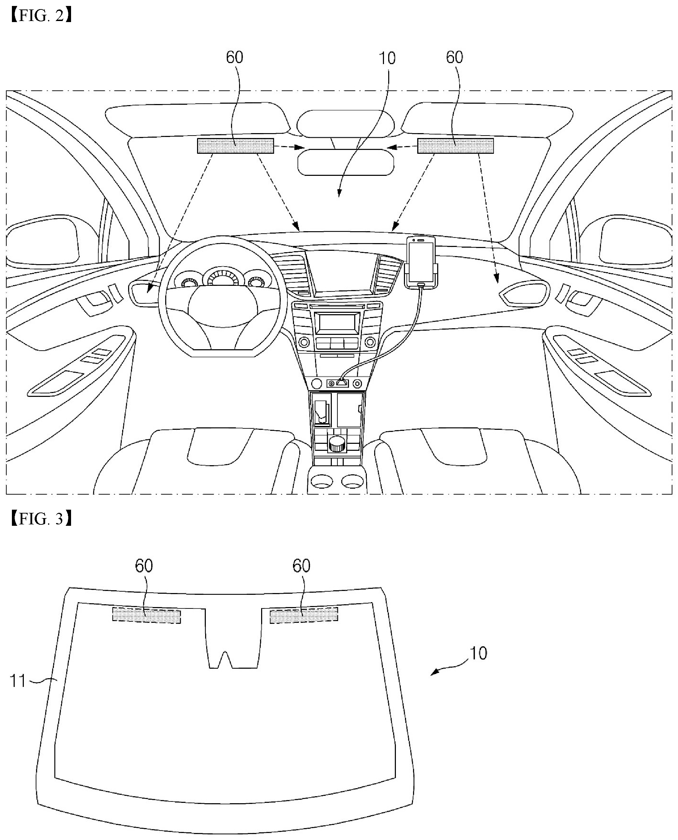

FIG. 1 is a schematic view of a vehicle 1 and a vehicle glass 10 according to one embodiment of the present disclosure. FIG. 2 is a schematic view of a state in which radio wave communication occurs through the vehicle glass 10 according to one embodiment of the present disclosure.

Referring to FIGS. 1 and 2, a radio wave for communication between a terminal device provided in the vehicle and the outside of the vehicle may pass through the vehicle glass 10 of the vehicle 1. Although the vehicle glass 10 is illustrated as facing the front of the vehicle 1 in the drawings, the present disclosure is not limited thereto.

In particular, in recent years, there has been an increase in demand for increasing the sensitivity of transmission and reception of a radio wave transmitted through the inside and outside of the vehicle 1 due to an electronic toll collecting system (ETCS) which is a system for automatically paying tolls of the vehicle 1, Emergency Call (E-Call) which is a device for automatically notifying of an accident when an accident of the vehicle 1 occurs, a global navigation satellite system (GNSS) which is a global positioning system for navigation or the like of the vehicle 1, and a portable electronic device of a user being provided in the vehicle 1.

Accordingly, conventionally, there has been a need for the vehicle glass 10 to be equipped with a radio wave transmission window for transmitting radio waves transmitted to and received from the outside of the vehicle glass 10 and the inside of the vehicle glass 10. The radio wave transmission window may be understood as an opening in a metal layer provided on one surface of a first glass plate of the vehicle glass 10 made of laminated glass. Accordingly, insulation performance of the vehicle glass 10 may relatively weaken in a predetermined region of the metal layer that corresponds to a radio wave transmission layer.

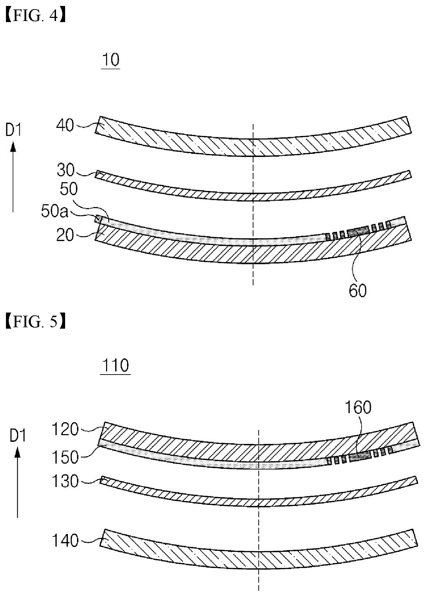

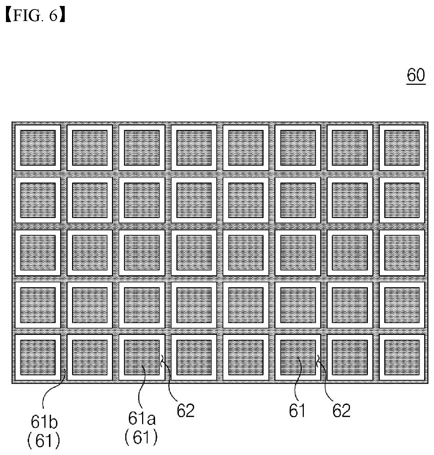

In the vehicle glass 10 according to the present disclosure, a fine opening 62 (see FIG. 6) is formed in a metal layer 50 (see FIG. 4) without a radio wave transmission window being separately provided, and thus the sensitivity of radio wave transmission and reception of the vehicle glass 10 can be improved while improving the insulation performance of the vehicle glass 10.

A pattern transmission portion 60 including the opening 62 mentioned above may be provided in a predetermined region of the vehicle glass 10. The pattern transmission portion 60 may be disposed at an upper side of the vehicle glass 10, but the present disclosure is not limited thereto.

A radio wave that enters through the pattern transmission portion 60 may be refracted and may reach various electronic devices in the vehicle 1, and a radio wave transmitted from the electronic devices in the vehicle 1 may be refracted to the outside of the vehicle 1 through the pattern transmission portion 60.

The vehicle glass 10 will be described in detail below.

FIG. 3 is a schematic view of the vehicle glass 10 according to one embodiment of the present disclosure. FIG. 4 is an exploded view of the vehicle glass 10 according to one embodiment of the present disclosure.

Referring to FIGS. 3 and 4, the vehicle glass 10 may include a coupling portion 11 extending along the periphery of the vehicle glass 10. The coupling portion 11 may be a portion for coupling to a vehicle frame of the vehicle 1 (see FIG. 1). The vehicle glass 10 may include the pattern transmission portion 60 provided in a partial region to allow a radio wave to be transmitted and refracted through the vehicle glass. The pattern transmission portion 60 will be described in detail below.

The vehicle glass 10 may include a first glass plate 20 and a second glass plate 40 disposed to face the first glass plate 20. The first glass plate 20 and the second glass plate 40 may each be a flat glass, a float glass, a quartz glass, a borosilicate glass, or a soda-lime glass and may each be made of polyethylene, polypropylene, polycarbonate, or polymethyl methacrylate. The first glass plate 20 and the second glass plate 40 may each have a thickness ranging from 0.5 mm to 5.0 mm in a first direction D1, but the present disclosure is not limited thereto.

The vehicle glass 10 may include a laminating film 30 that is provided between the first glass plate 20 and the second glass plate 40 and laminates the first glass plate 20 and the second glass plate 40. The laminating film 30 may be made of polyvinyl butyral (PVB), an optically clear adhesive (OCA), thermoplastic urethane (TPU), or ethylene vinyl acetate (EVA). The laminating film 30 may have a thickness ranging from 0.38 mm to 1.5 mm in the first direction D1, but the present disclosure is not limited thereto.

The vehicle glass 10 may include the metal layer 50 provided on one surface of the first glass plate 20 that faces the second glass plate 40. The metal layer 50 may be provided on the one surface of the first glass plate 20 that faces the second glass plate 40 and may insulate between the outside and inside of the vehicle glass 10. The metal layer 50 may be made of a Ag-based dielectric layer, a SiAlNₓ-based dielectric layer, a TiO₂ protective film, a Ti layer, or a NiCr layer or may be made of a TCO layer such as an ITO layer, an FTO layer, or an ATO layer.

The metal layer 50 may be understood as a heating coating layer that is heated by resistance due to a voltage being applied thereto. The metal layer 50 may have a surface resistance ranging from 0.7 Ω/sq to 20.0 Ω/sq, but the present disclosure is not limited thereto.

A terminal 50a that is electrically connected to the metal layer 50 and protrudes to the outside may be provided on the metal layer 50. Because the metal layer 50 may emit heat due to resistance of the metal layer 50 when a voltage is applied to the metal layer 50 using the terminal 50a, when frost forms on the vehicle glass 10, it is possible to address this, and thus usability can be improved.

The pattern transmission portion 60 may be provided in a partial region of the metal layer 50 to allow a radio wave that enters through the one surface of the first glass plate 20 that faces the second glass plate 40 to be transmitted and refracted through the first glass plate 20.

In other words, the metal layer 50 may be stacked on one surface of the first glass plate 20 that faces the first direction D1, the laminating film 30 may be stacked in the first direction D1 from the metal layer 50, and the second glass plate 40 may be stacked in the first direction D1 from the laminating film 30. That is, the laminating film 30 may be provided between the metal layer 50 and the second glass plate 40.

Meanwhile, although FIG. 4 shows a structure in which the second glass plate 40 is disposed further forward than the first glass plate 20, the present disclosure is not limited thereto, and as in FIG. 5 which will be described below, the first glass plate 20 may be disposed further forward than the second glass plate 40.

FIG. 5 is an exploded view of a vehicle glass 110 according to another embodiment of the present disclosure. The vehicle glass 110 may include a first glass plate 120, a second glass plate 140 disposed to face the first glass plate 120, a laminating film 130 provided between the first glass plate 120 and the second glass plate 140, and a metal layer 150 provided between the first glass plate 120 and the laminating film 130. A pattern transmission portion 160 may be provided in a partial region of the metal layer 150.

The laminating film 130 may be stacked in the first direction D1 from the second glass plate 140 of the vehicle glass 110 , the metal layer 150 may be stacked in the first direction D1 from the laminating film 130, and the first glass plate 120 may be stacked in the first direction D1 from the metal layer 150.

FIG. 6 is a schematic view of the pattern transmission portion 60 according to one embodiment of the present disclosure.

Referring to FIG. 6, the pattern transmission portion 60 may include a metal insulation portion 61 and the opening 62 each having a structure smaller than a wavelength of a radio wave that enters through the vehicle glass 10. The metal insulation portion 61 is a portion of the metal layer 50 (see FIG. 4) and may be a configuration attached to the one surface of the first glass plate 20 that faces the second glass plate 40 and insulating an inner portion of the first glass plate 20 from an outer portion of the first glass plate 20. The opening 62, which will be described below, may be formed adjacent to the metal insulation portion 61 by being cut due to radiation of a laser or the like from the metal layer 50.

More specifically, the metal insulation portion 61 may be a remaining region of the pattern transmission portion 60 excluding the opening 62 from the metal layer 50. In other words, a radio wave incident on the vehicle glass 10 may be incident on the first glass plate 20 while refracted through the opening 62 and may reach an electronic device in the vehicle 1.

For example, the metal insulation portion 61 may include a first metal pattern 61a formed in a lattice shape and a second metal pattern 61b provided to be surrounded by the first metal pattern 61a. The second metal pattern 61b may be formed in a quadrangular shape, but the present disclosure is not limited thereto, and the second metal pattern 61b may be formed in a polygonal shape or a circular shape.

The opening 62 may be provided to surround the second metal pattern 61b between the first metal pattern 61a and the second metal pattern 61b. That is, a direction in which the opening 62 extends may be adjusted according to a direction in which the laser is radiated from the metal layer 50, and as in FIG. 6, the opening 62 may be provided to extend along the periphery of a quadrangle, and accordingly, the one surface of the first glass plate 20 (see FIG. 4) that faces the second glass plate 40 can be exposed through the opening 62. Accordingly, a radio wave that enters the vehicle glass 10 through the opening 62 may be refracted and guided toward an electronic device provided in the vehicle 1.

An entire region of the pattern transmission portion 60 may be formed to have a horizontal length of 50 mm and a vertical length of 100 mm or a horizontal length of 100 mm and a vertical length of 300 mm, and a ratio of an area of the opening 62 to an area of the pattern transmission portion 60 may range from 17% to 24%.

That is, the opening 62 may serve to correspond to a type of lens, and because a radio wave can be adjusted to a specific position of the vehicle 1 according to the shape of the opening 62, the sensitivity of reception of a radio wave passing through the vehicle glass 10 can be improved.

In addition, the opening 62 has a structure smaller than a wavelength of a radio wave, and a user may not be able to distinguish between the pattern transmission portion 60 and the metal layer 50. In this way, aesthetics of the vehicle glass 10 may be enhanced.

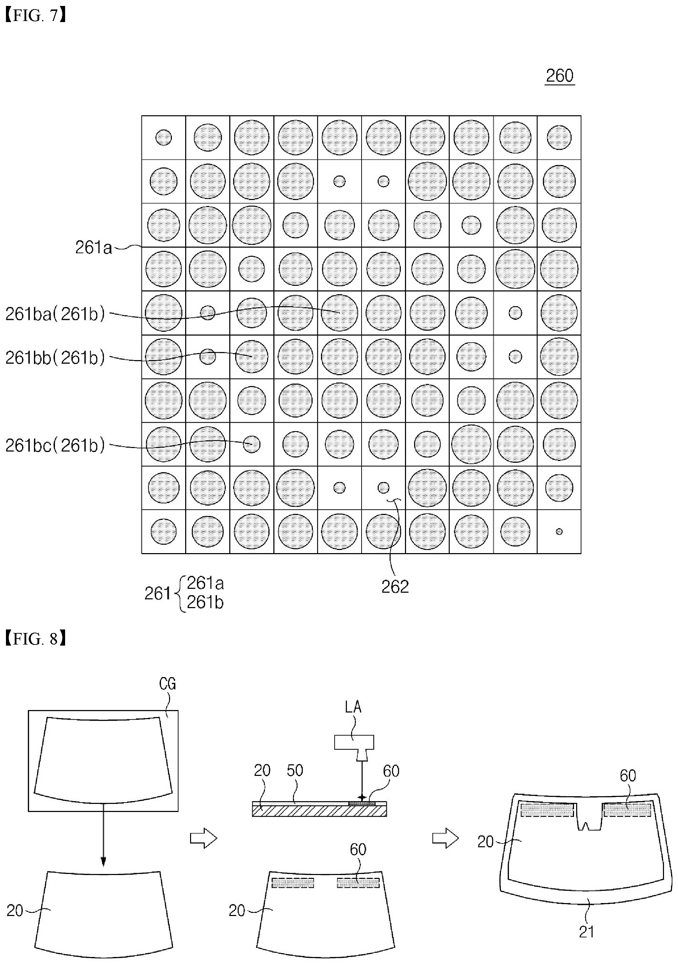

FIG. 7 is a schematic view of a pattern transmission portion 260 according to another embodiment of the present disclosure.

Referring to FIG. 7, a metal insulation portion 261 of the pattern transmission portion 260 may include a first metal pattern 261a formed in a lattice shape and a second metal pattern 261b provided to be surrounded by the first metal pattern 261a.

A width of the first metal pattern 261a may be provided to be smaller than a width of the first metal pattern 61a of FIG. 6 that has been described above. The second metal pattern 261b may be provided between portions of the first metal patterns 261a and may each be formed in a circular shape of a different size.

The second metal patterns 261b may include, in order by size, a first sub metal pattern 261ba having a first size, a second sub metal pattern 261bb having a second size smaller than the first size, and a third sub metal pattern 261bc having a third size smaller than the second size.

The metal insulation portion 261 may also be understood as a region of the metal layer 50 excluding an opening 262 formed by being cut due to radiation of a laser from the metal layer 50, and the shape of the metal insulation portion 261 may be adjusted by adjusting the radiation of the laser.

An entire region of the pattern transmission portion 260 may be formed to have a horizontal length of 50 mm and a vertical length of 100 mm or a horizontal length of 100 mm and a vertical length of 300 mm, and a ratio of an area of the opening 262 to an area of the pattern transmission portion 260 may range from 24% to 32%. That is, the shape of the pattern transmission portion 60 or the pattern transmission portion 260 is not limited, the ratios of the areas of the openings 62 and 262 to the areas of the pattern transmission portions 60 and 260 may be set as parameters, and the metal insulation portions 61 and 261 may be provided in various shapes.

Even in FIG. 7, the one surface of the first glass plate 20 (see FIG. 4) that faces the second glass plate 40 can be exposed through the opening 262, and in this way, a radio wave incident on the vehicle glass 10 may be refracted through the opening 262 and may be guided toward an electronic device provided in the vehicle 1.

That is, the opening 262 may serve to correspond to a type of lens, and effects thereof may be similar to those of the pattern transmission portion 260.

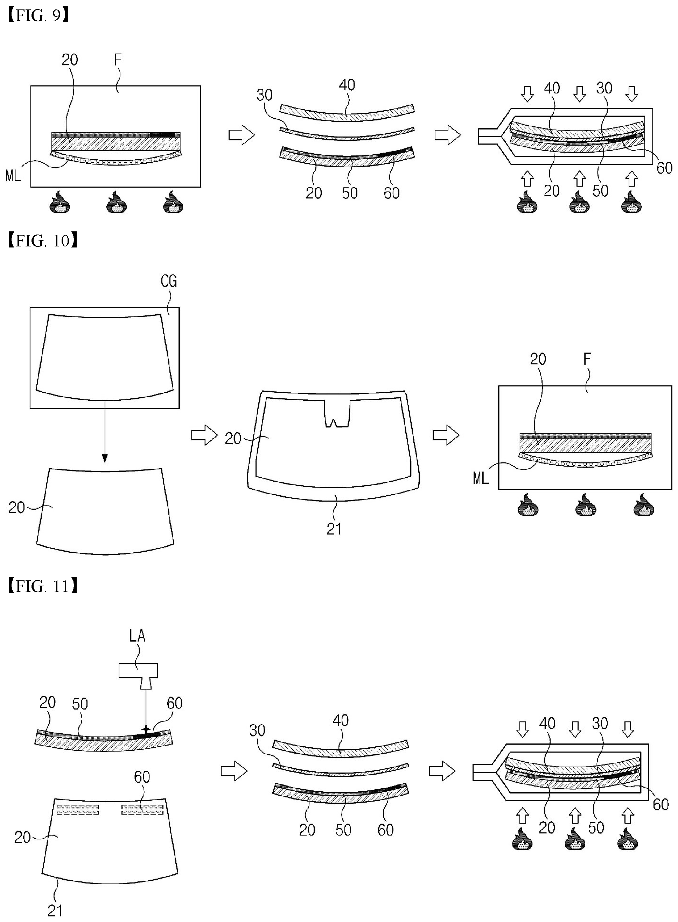

FIGS. 8 and 9 are schematic views illustrating a manufacturing method of the vehicle glass 10 according to one embodiment of the present disclosure. In relation to a method of manufacturing the vehicle glass 10, a manufacturing method of the vehicle glass 10 using a flat glass processing method will be described with reference to FIGS. 8 and 9.

The manufacturing method of the vehicle glass 10 using the flat glass processing method that will be described below may include cutting a coating glass CG having the first glass plate 20 and the metal layer 50, forming the pattern transmission portion 60 by radiating a laser of the flat glass processing method toward the metal layer 50 of the cut coating glass CG, and printing a band region 21 on the coating glass CG on which the pattern transmission portion 60 is formed. The manufacturing method of the vehicle glass 10 may then include bending the first glass plate 20 and the metal layer 50 of the cut coating glass CG into curved shapes, stacking the laminating film 30 on the metal layer 50 of the coating glass CG that is bent into a curved shape, and then stacking the second glass plate 40 on the laminating film 30. The manufacturing method of the vehicle glass 10 may then include laminating the first glass plate 20, the metal layer 50, the laminating film 30, and the second glass plate 40. Each step will be described in detail below. In relation to the step of cutting the coating glass CG having the first glass plate 20 and the metal layer 50, the first glass plate 20 may be obtained by cutting out a predetermined region from the coating glass CG. Here, the metal layer 50 may be provided on one surface of the first glass plate 20.

Then, the step of forming the pattern transmission portion 60 by radiating a laser of the flat glass processing method toward the metal layer 50 of the cut coating glass CG may be performed. That is, a laser may be radiated toward a predetermined region of the metal layer 50 using a laser apparatus LA according to a flat glass laser processing method. According to such a method, the laser apparatus LA can radiate the laser to a desired region of the metal layer 50, and a radiation area or the like of the laser can be adjusted through a lens.

Here, the laser may be provided as a fiber laser, a Nd:YAG laser, or a CO₂ laser and may be radiated at a wavelength of 355 nm, 532 nm, or 1064 nm. When a wavelength range exceeds the above, an error rate of the pattern transmission portion 60 may increase due to diffraction of the laser, and conversely, when a wavelength range is below the above, deformation of the first glass plate 20 may occur.

In addition, output of the laser may be provided as 10 W, 20 W, 60 W, or 100 W, when an output range exceeds the above, damage to the first glass plate 20 may occur, and when an output range is below the above, foreign matter due to the laser may form on the metal insulation portions 61 and 261 after scribing for marking the openings 62 and 262.

A radiation range of the laser may be 50 mm × 50 mm, 100 mm × 100 mm, or 200 mm × 200 mm, and a separation distance between a lens (not illustrated) of the laser apparatus LA and the metal layer 50 may be provided to range from 0.05 m to 2 m in a direction perpendicular to the metal layer 50. When the separation distance is provided smaller than the above range, it may be difficult to implement the openings 62 and 262.

A linewidth of the laser may be provided to range from 10 µm to 200 µm, when the linewidth exceeds the above range, the sizes of the openings 62 and 262 of the pattern transmission portions 60 and 260 may increase and insulation performance may degrade, and when the linewidth is below the above range, an excessively long time may be taken for implementing an ultrafine pattern of the pattern transmission portion 60, and mass productivity may decrease.

In addition, a process speed of the laser apparatus LA may range from 200 mm/s to 800 mm/s, when the process speed exceeds the above range, an error rate of the openings 62 and 262 may increase, and when the process speed is below the above range, mass productivity may decrease.

A separation suctioning portion that suctions contaminants may be provided on the laser apparatus LA to prevent contamination of a portion radiating the laser.

When manufacturing is performed by adjusting the shapes of the openings 62 and 262 through adjustment of the laser apparatus LA, the pattern transmission portion 60 may be formed on one surface of the first glass plate 20.

Then, the band region 21 for coupling to a vehicle frame may be printed on the first glass plate 20 along the periphery of the first glass plate 20. That is, the step of printing the band region 21 on the coating glass CG on which the pattern transmission portion 60 is formed may be performed.

Then, the step of bending the first glass plate 20 and the metal layer 50 of the cut coating glass CG into curved shapes may be performed. That is, the first glass plate 20 on which the band region 21 is printed and the metal layer 50 is provided may be installed in a mold ML in a heating apparatus F for bending the first glass plate 20 and the metal layer 50 into curved shapes, and the heating apparatus F may cause deformation of the first glass plate 20 and the metal layer 50. The mold ML in the heating apparatus F may have a structure for supporting the first glass plate 20 to allow the first glass plate 20 to be deformed with a desired curvature.

Then, the laminating film 30 may be stacked on the metal layer 50, and the second glass plate 40 may be stacked on the laminating film 30. That is, the step of stacking the laminating film 30 on the metal layer 50 of the coating glass CG that is bent into a curved shape and the step of stacking the second glass plate 40 on the laminating film 30 may be performed.

Then, the step of laminating the first glass plate 20, the metal layer 50, the laminating film 30, and the second glass plate 40 may be performed. That is, when the first glass plate 20, the metal layer 50, the laminating film 30, and the second glass plate 40 are laminated at a high temperature and a high pressure in a high-pressure reaction container (autoclave, not illustrated), manufacturing of the vehicle glass 10 may be completed.

FIGS. 10 and 11 are schematic views illustrating another manufacturing method of the vehicle glass 10 according to one embodiment of the present disclosure. In relation to a method of manufacturing the vehicle glass 10, a manufacturing method of the vehicle glass 10 using a curved glass processing method will be described with reference to FIGS. 10 and 11. Here, details of the laser apparatus LA may be the same as those described above.

The manufacturing method of the vehicle glass 10 using the curved glass processing method that will be described below may include cutting the coating glass CG having the first glass plate 20 and the metal layer 50, printing the band region 21 on the cut coating glass CG, and bending the first glass plate 20 and the metal layer 50 of the coating glass CG into curved shapes. The manufacturing method of the vehicle glass 10 may include forming the pattern transmission portion 60 by radiating a laser of the curved glass processing method toward the bent metal layer 50. The manufacturing method of the vehicle glass 10 may include stacking the laminating film 30 on the metal layer 50 on which the pattern transmission portion 60 is formed and stacking the second glass plate 40 on the laminating film 30. The manufacturing method of the vehicle glass 10 may then include laminating the first glass plate 20, the metal layer 50, the laminating film 30, and the second glass plate 40. Each step will be described in detail below.

The manufacturing method of the vehicle glass 10 may include cutting the coating glass CG having the first glass plate 20 and the metal layer 50. Here, the first glass plate 20 on which the metal layer 50 is provided may be obtained by cutting out a predetermined region from the coating glass CG.

Then, the step of printing the band region 21 on the cut coating glass CG may be performed, and the band region 21 for coupling to a vehicle frame may be printed on the first glass plate 20 along the periphery of the first glass plate 20.

Then, the step of bending the first glass plate 20 and the metal layer 50 of the coating glass CG into curved shapes may be performed. More specifically, the coating glass CG on which the band region 21 is printed may be installed in the mold ML in the heating apparatus F for bending the first glass plate 20 and the metal layer 50 into curved shapes, and the heating apparatus F may cause deformation of the first glass plate 20. The mold ML in the heating apparatus F may have a structure for supporting the first glass plate 20 to allow the first glass plate 20 to be deformed with a desired curvature.

Then, the step of forming the pattern transmission portion 60 by radiating a laser of the curved glass processing method toward the bent metal layer 50 may be performed. In other words, a laser may be radiated to the metal layer 50 provided on one surface of the first glass plate 20 that is bent using the laser apparatus LA that corresponds to the above-described structure. The pattern transmission portion 60 of the metal layer 50 may be formed by radiating a laser with a desired shape or area. Here, a structure of radiating a laser to the first glass plate 20 that is already bent may be different from that of FIGS. 8 and 9.

Then, the step of stacking the laminating film 30 on the metal layer 50 on which the pattern transmission portion 60 is formed and the step of stacking the second glass plate 40 on the laminating film 30 may be performed. In other words, the laminating film 30 may be laminated to the metal layer 50, and the second glass plate 40 may be stacked on the laminating film 30.

Then, the step of laminating the first glass plate 20, the metal layer 50, the laminating film 30, and the second glass plate 40 may be performed. That is, when the first glass plate 20, the metal layer 50, the laminating film 30, and the second glass plate 40 are laminated at a high temperature and a high pressure in a high-pressure reaction container (autoclave, not illustrated), manufacturing of the vehicle glass 10 may be completed.

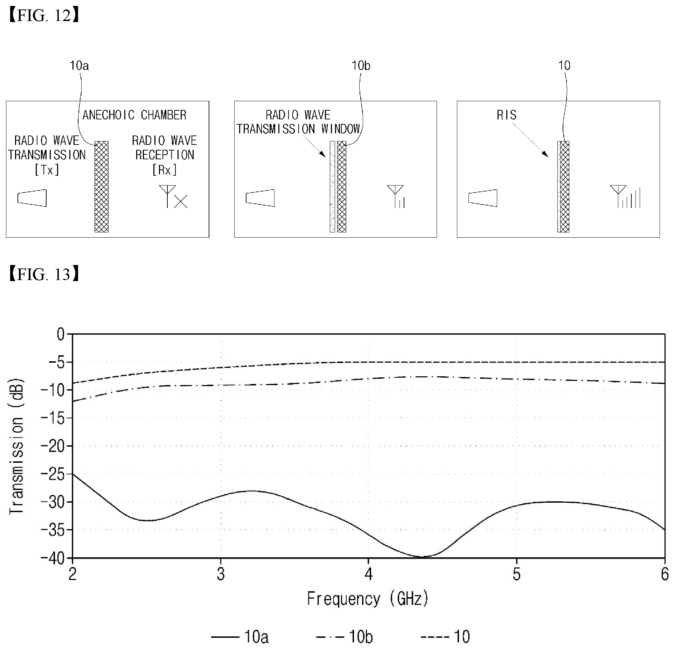

FIGS. 12 and 13 are views showing experimental examples for radio wave reception according to the vehicle glass according to one embodiment of the present disclosure, a low emissivity (low-E) glass 10a, and a low-E glass 10b with a radio wave transmission window and results thereof.

Referring to FIGS. 12 and 13, an improvement in the sensitivity of radio wave reception in the vehicle glass 10 according to one embodiment of the present disclosure compared to the conventional low-E glass 10a and the low-E glass 10b with the radio wave transmission window will be described. The low-E glass may be understood as glass that minimizes movement of heat and aids energy saving by having a glass surface coated with a metal oxide material.

Experiments were conducted in anechoic chambers by stacking a metal layer on each of the vehicle glass 10, the low-E glass 10a, and the low-E glass 10b with the radio wave transmission window, each of which had the same area, a horizontal length of 300 mm by a vertical length of 300 mm.

More specifically, in each anechoic chamber, a radio wave transmitter may be provided on one side of one of the low-E glass 10a, the low-E glass 10b with the radio wave transmission window, and the vehicle glass 10, and a radio wave receiver may be provided on the other side of one of the low-E glass 10a, the low-E glass 10b with the radio wave transmission window, and the vehicle glass 10. As the radio wave receiver, ZVA 67 Vector Network Analyzer of ROHDE&SCHWARZ was used.

The low-E glass 10a may be understood as glass from which a metal layer is not removed, the low-E glass 10b with the radio wave transmission window may be understood as glass in which a ratio of an area of the radio wave transmission window to an area of the low-E glass 10b is 34%, and the vehicle glass 10 may be understood as glass in which a ratio of an area of the opening 62 or 262 to an area of the pattern transmission portion 60 or 260 is 24%.

Referring to FIG. 13, it can be confirmed that the reception sensitivity of the radio wave receiver for a radio wave transmitted from the radio wave transmitter was higher and was improved by about 3.2 dB in the vehicle glass 10 compared to the low-E glass 10a and the low-E glass 10b with the radio wave transmission window in a range of 2 to 6 GHz.

That is, in other words, by the area of the opening 62 or 262 being reduced by 10% in the vehicle glass 10 compared to the low-E glass 10b with the radio wave transmission window, insulation performance can be improved by about 10%.

The above description is merely an illustrative description of the technical idea of the present invention, and various modifications and variations can be made by those of ordinary skill in the art to which the present invention pertains without departing from the essential characteristics of the present invention. Accordingly, the embodiments disclosed in the present invention are not intended to limit the technical idea of the present invention, but are for illustrative purposes, and the scope of the technical idea of the present invention is not limited by the embodiments. The scope of protection of the present invention should be construed according to the claims below, and all technical ideas within the equivalent scope should be construed as being included in the scope of rights of the present invention.

## Claims

1. A vehicle glass comprising:
a first glass plate;
a second glass plate disposed to face the first glass plate; and
a metal layer provided on one surface of the first glass plate that faces the second glass plate and having a pattern transmission portion formed in a partial region to allow a radio wave that enters through the one surface to be transmitted and refracted through the first glass plate.

2. The vehicle glass of claim 1, wherein the pattern transmission portion includes:
a metal insulation portion provided to insulate an inner portion of the first glass plate from an outer portion of the first glass plate; and
an opening formed adjacent to the metal insulation portion by being cut from the metal layer.

3. The vehicle glass of claim 2, wherein:
the metal insulation portion includes a first metal pattern formed in a lattice shape and a second metal pattern provided to be surrounded by the first metal pattern; and
the opening extends to surround the second metal pattern between the first metal pattern and the second metal pattern.

4. The vehicle glass of claim 3, wherein the second metal pattern is formed in a polygonal shape or a circular shape.

5. The vehicle glass of claim 1, further comprising a terminal that is electrically connected to the metal layer and protrudes to the outside.

6. The vehicle glass of claim 1, further comprising a laminating film provided between the metal layer and the second glass plate.

7. A manufacturing method of a vehicle glass, the manufacturing method comprising:
cutting a coating glass on which a metal layer is provided;
forming a pattern transmission portion by radiating a laser toward the metal layer of the cut coating glass;
stacking a laminating film on the metal layer; and
stacking a glass plate on the laminating film.

8. The manufacturing method of claim 7, wherein the radiating of the laser toward the metal layer of the cut coating glass includes radiating the laser using a flat glass laser processing method.

9. The manufacturing method of claim 7, further comprising, after the forming of the pattern transmission portion, bending the cut coating glass into a curved shape.

10. The manufacturing method of claim 7, wherein the radiating of the laser toward the metal layer of the cut coating glass includes radiating the laser using a curved glass laser processing method.

11. The manufacturing method of claim 7, further comprising, after the cutting of the coating glass, bending the cut coating glass into a curved shape.

12. The manufacturing method of claim 7, further comprising, after the stacking of the glass plate on the laminating film, laminating the coating glass, the laminating film, and the glass plate.
